# EUROPEAN PATENT APPLICATION

(11) **EP 2 096 332 A1**
(43) Date of publication of application: **02.09.2009**
(21) Application number: 09153741.5
(22) Date of filing: 26.02.2009
(51) Int. Cl.: F16H 33/02

(54) **Automatic gearbox based on elastic rings**

(30) Priority: 29.02.2008 PT 1030408 U
(71) Applicant: Cardoso, Virgílio Jesus, 2720-177 Amadora (PT)
(72) Inventor: Cardoso, Virgílio Jesus, 2720-177 Amadora (PT)
(74) Representative: Alves Moreira, Pedro

(57) **Abstract**

The present invention relates to a mechanical system wherein the speed ratio between two shafts, a drive shaft (Vₘ) and a resistant shaft (Vᵣ), is determined by the load that the resistant shaft (Vᵣ) applies on said drive shaft (Vₘ). This mechanical system is applicable, for example, as an automatic gearbox in motor vehicles. Eccentric rollers (1, 1a) are fitted on shaft (Vₘ) at diametric positions, which act on rings (2, 2a) which, in turn, engage in a connection wheel (3) placed inside said rings (2, 2a) and integral with a shaft (Vᵣ). Within elastic rings (2, 2a) a pair of pulleys (4, 4a) are fitted which, in turn, are assembled at an arm (7) that displaces said pulleys (4, 4a) between at least two allowed positions which are symmetric with respect to shaft (Vₘ), allowing to reverse the rotation direction of rings (2, 2a) and, therefore, the shaft (Vᵣ).

## Description

### FIELD OF THE INVENTION

The present invention relates to a mechanical system wherein the speed ratio between two shafts, one being the input or drive shaft and the other being the output or resistant shaft, is determined by the load exerted by the resistant shaft on the drive shaft. This mechanical system is applicable, for example, as an automatic gearbox in motor vehicles.

### BACKGROUND OF THE INVENTION

A conventional gearbox generally comprises a clutch, a coupling device, sets of gears and an operation control mechanism. It is a complicated and expensive mechanism with a high number of parts.

The present invention discloses a surprisingly non conventional gearbox in which the power transmission is done by elastic rings which couple a drive shaft to a resistant shaft, instead of conventional gears. The elastic rings are contacted by rollers which are fixed and eccentrically mounted on a drive shaft, which rotational movement and eccentricity of rollers causes the latter to push onto said elastic rings thereby generating bending thereof. This bending of elastic rings forces a resistant wheel engaged therein to rotate. As said resistant wheel is integral to at least one resistant shaft, they rotate together. The rotation amplitude depends on the eccentricity of rollers on the drive shaft and the load on the resistant shaft.

The present gearbox enables a motor vehicle to save fuel when in a descent route or level ground because it may operate like free wheel in any of these situations, and may allow using the vehicle engine as a breaking means by changing the shift lever position.

The mechanism of the present invention is very simple and has further advantages in relation to a conventional prior art gearbox, namely: easy and inexpensive production and maintenance, avoids a differential device and is very light.

### SUMMARY OF THE INVENTION

The present invention relates to an automatic gearbox based on elastic rings, comprising at least one drive shaft Vₘ, at least one resistant shaft Vᵣ and at least one lever 6, characterized by further comprising at least one eccentric roller 1, 1a, at least one connection wheel 3, at least one elastic ring 2, 2a, at least one pulley 4, 4a, at least two pulleys 5, 5a and at least one arm 7,
wherein
said at least one eccentric roller 1, 1a is eccentrically fitted on said at least one drive shaft Vₘ and makes contact with the outer surface of respective at least one elastic ring 2, 2a, this arrangement allowing said at least one roller 1, 1a to push respective at least one elastic ring 2, 2a on its contact point, forcing the latter to bend;
said at least one connection wheel 3 is integral with said at least one resistant shaft Vᵣ and is connected to said at least one elastic ring 2, 2a;
said at least one elastic ring 2, 2a transfer power from said at least one drive shaft Vₘ to said at least one resistant shaft Vᵣ;
said at least one pulley 4, 4a is fitted to said at least one arm 7 and abut onto the inner surface of respective said at least one elastic ring 2, 2a, the at least one pulley 4, 4a being displaceable by said arm 7, to any of two symmetric positions with respect to said drive and resistant shafts Vₘ, Vᵣ;
said at least two pulleys 5, 5a are fitted outside of said at least one elastic ring 2, 2a and are located in the lower part of the at least one connection wheel 3, at symmetric positions with respect to at least one resistant shaft Vᵣ, said pulleys 5, 5a acting to keep said at least one elastic ring 2, 2a in contact with the at least one connection wheel 3;
said at least one arm 7 is linked to said at least one lever 6 and is operated by the latter, said arm 7 providing displacement to said at least one pulley 4, 4a allowing to place the latter in one out of at least two symmetric positions with respect to said drive and resistant shafts Vₘ, Vᵣ; and
the displacement of said at least one pulley 4, 4a between said symmetric positions with respect to said drive and resistant shafts Vₘ, Vᵣ allows to reverse the rotation direction of said at least one connection wheel 3 and, accordingly, of said at least one resistant shaft Vᵣ integral therein.

In a preferred embodiment the automatic gearbox comprises one drive shaft Vₘ, two resistant shafts Vᵣ and one lever 6, characterized by further comprising two eccentric rollers 1, 1a, two toothed wheels 3', 3a', two elastic rings 2, 2a, two pairs of pulleys 4', 4a', two pulleys 5, 5a, one tilt arm 7' and one tilt arm 8,
wherein
said two eccentric rollers 1, 1a are eccentrically fitted on said drive shaft Vₘ, in diametrical positions, each making contact with the outer surface of each of said two elastic rings 2, 2a, this arrangement allowing said two eccentric rollers 1, 1a to push respective two elastic rings 2, 2a alternately on its respective contact points, forcing the latter to bend alternately;
said two toothed wheels 3', 3a' are fitted on a same axle;
each of two toothed wheels 3', 3a' is integral with each of two resistant shafts Vᵣ, Vᵣ', and engage side teeth provided on each of said two elastic rings 2, 2a, respectively;
said two pairs of pulleys 4, 4a are fitted, on said tilt arm 7', in symmetric positions with respect to said resistant shafts Vᵣ, Vᵣ', being operated by said lever 6 which is linked to said arm 7' at a rotation point 10 located half way between said two pairs of pulleys 4', 4a', providing a tilt movement to said arm 7';
said two pulleys 5, 5a are placed on said tilt arm 8 in symmetric positions with respect to said two resistant shafts V_{r,} Vᵣ';
said tilt arm 8 is fixed, with respect to translational movement, at a rotation point 9 which is located half way between said two pulleys 5, 5a, and at another end is connected to said lever 6, being operated by latter;
said tilt arm 8 and said arm 7' are simultaneously operated by said lever 6.

In other embodiment the automatic gearbox is characterized by said at least one lever 6 being displaceable between two positions.

In a further embodiment the automatic gearbox is characterized by the displacement of said at least one lever 6 between said two positions providing reversion of rotation direction of said at least one connection wheel 3.

The automatic gearbox of the present invention is intended to be used in motor vehicles, motor devices, aero-generators, continuous presses, and the like.

### BRIEF DESCRIPTION OF DRAWINGS

The invention will become apparent to persons skilled in the art from the following detailed description and claims in association with drawings, in which:
Figure 1 schematically shows a simple imaginary mechanism which acts by same principles as the mechanism of the present invention.
Figure 2 is a top view that shows the parts of the mechanism of the present invention.

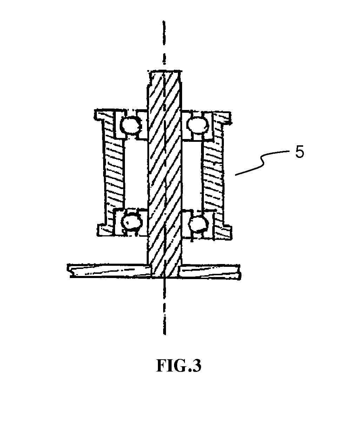

Figure 3 is a sectional view taken from line AB, of figures 2 and 6, in order to illustrate details of the mechanism of the present invention.

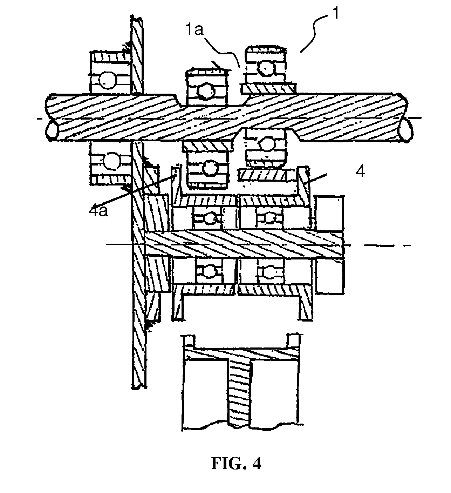

Figure 4 is a sectional view taken from line CD of figure 2 in order to illustrate details of the mechanism of the present invention.
Figure 5 schematically represents the positions of a elastic ring 2, 2a when eccentricity of the wheel 1 is minimum (solid line) and when is maximum (dashed line), as well as components of forces applied to ring 2, 2a when eccentricity is maximum and the wheel 3 is stopped.
Figure 6 is a top view showing a preferred embodiment of the mechanism of the present invention.

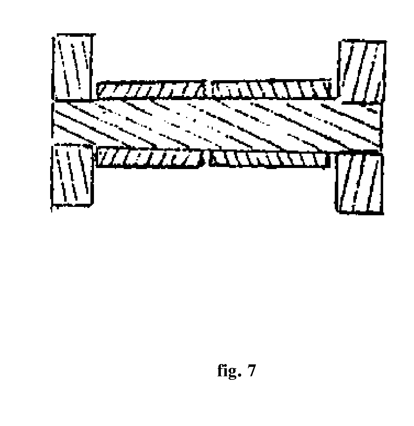

Figure 7 is a sectional view taken from line C'D' of figure 6 in order to illustrate details of the pulley 4'.

### DETAILED DESCRIPTION OF THE INVENTION

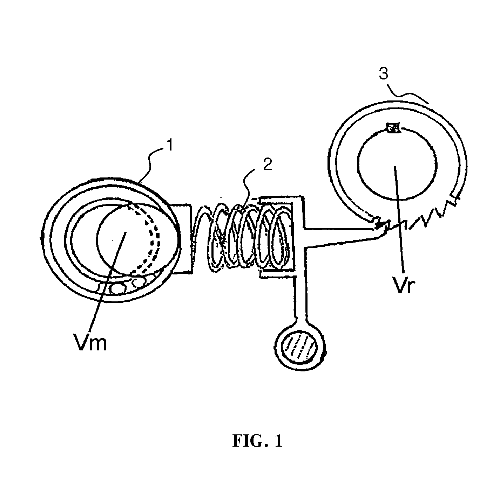

For explanatory reasons, the figure 1 schematically shows an imaginary mechanism which acts in a similar way (although it allows only one rotation direction of the output shaft Vᵣ) with respect to the present mechanism. Thus, the input shaft Vₘ integral with the eccentric wheel 1 presses the spring 2 against a tooth of the wheel 3 integral with the output shaft Vᵣ. If wheel 3 is stopped, spring 2 will be strongly pressed. If wheel 3 is free to move, the displacement of the tooth of wheel 3 will be equal to eccentricity of wheel 1. Thus, given a constant angular speed of input shaft, the angular speed from output shaft Vᵣ will be determined by resistive torque to which is subjected.

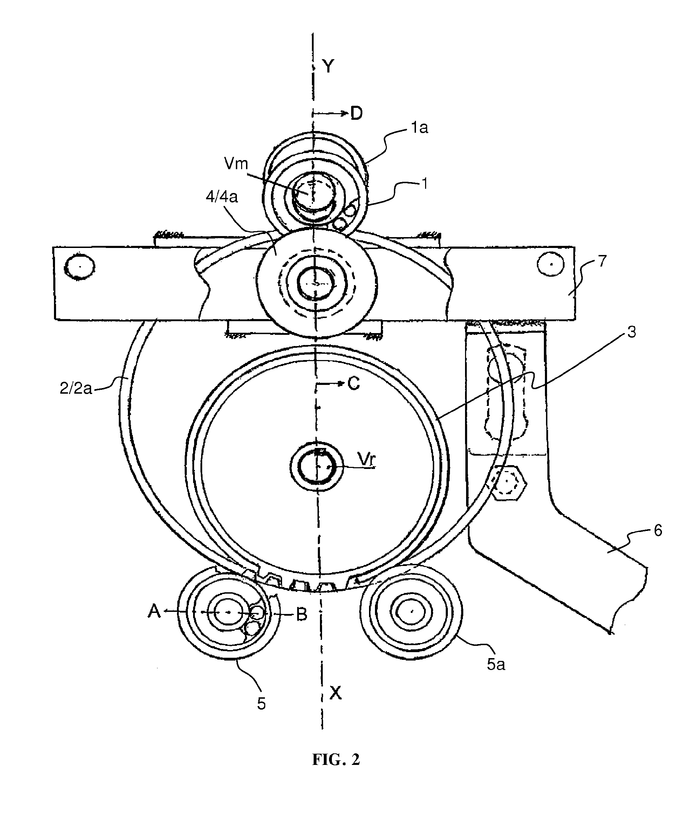

With reference to figure 2, in the automatic gearbox based on elastic rings of the present invention, the spring 2 of figure 1 is replaced with at least one flexible ring, named elastic ring and shown in figure 2 with reference numerals 2 and 2a (two elastic rings assumed in the figure 2 by way of example), which are engaged with at least one wheel 3 integral with at least one resistant shaft Vᵣ. At least one pair of free wheels fitted on a single axle and named pulleys, and represented in figure 2 by reference numerals 4 and 4a, may move to the left or right in relation to drive and resistant shafts Vₘ, Vᵣ by means of at least one lever 6 which operates at least one arm 7. When pulleys 4, 4a move to axis xy left, they pull the elastic rings 2, 2a against the wheel 3 causing the rings to deform, whereby the resultant of all forces applied to latter does not pass through geometric center of rings 2, 2a and accordingly a torque may be generated with respect to the geometric center of rings 2, 2a and the rotation thereof.

Further with respect to figure 2, at least one eccentric roller 1, 1a is fitted on drive shaft Vₘ and is designed to push the respective elastic ring 2, 2a, forcing it to bend.

In the case of two or more eccentric rollers 1, 1a, they would be fitted, for instance, in diametrical positions on the drive shaft Vₘ, each making contact with a respective elastic ring 2, 2a. This arrangement allows the rollers 1, 1a to push alternately respective elastic rings 2, 2a, onto its respective contact points forcing the bending of latter.

Resistant wheel 3 may be provided with side teeth which engage with side teeth of elastic rings 2 and 2a, or a connection by adherent contact may be used, as well as any other suitable connection means.

On the outer surface of elastic rings 2, 2a, at least two pulleys 5, 5a are positioned, symmetrical with respect to drive and resistant shafts Vₘ, Vᵣ, which are intended to keep the contact between elastic rings 2, 2a and resistant wheel 3, and further to serve as a support point for the lever effect caused by elastic rings 2, 2a due to its tilt movement.

The alternately displacement of pulleys 4, 4a, to the left or to the right with respect to drive and resistant shafts Vₘ, Vᵣ, allows to reverse the rotational direction of the output shaft Vᵣ.

Under normal operating conditions, an elastic ring 2, 2a has continuous circular movement at the contact point C with resistant wheel 3. At contact point A with eccentric roller 1, 1a, the movement will be the sum of preceding movement with a tilt movement due to the eccentricity, that is, the tilt movement hinged to the contact point C of the wheel 3 and an elastic ring 2, 2a.

The power that can be handled by the gearbox of the present invention basically depends on the:
● elastic ring 2, 2a dimensions,
● elastic ring 2, 2a materials,
● rollers 1, 1a eccentricity and
● resistant and drive shafts Vᵣ, Vₘ angular speed.

The elastic rings 2, 2a should be made of a material suitable to resist to high wear and loads. By way of example the carbon fiber, glass fiber or steel alloy material may be used among others.

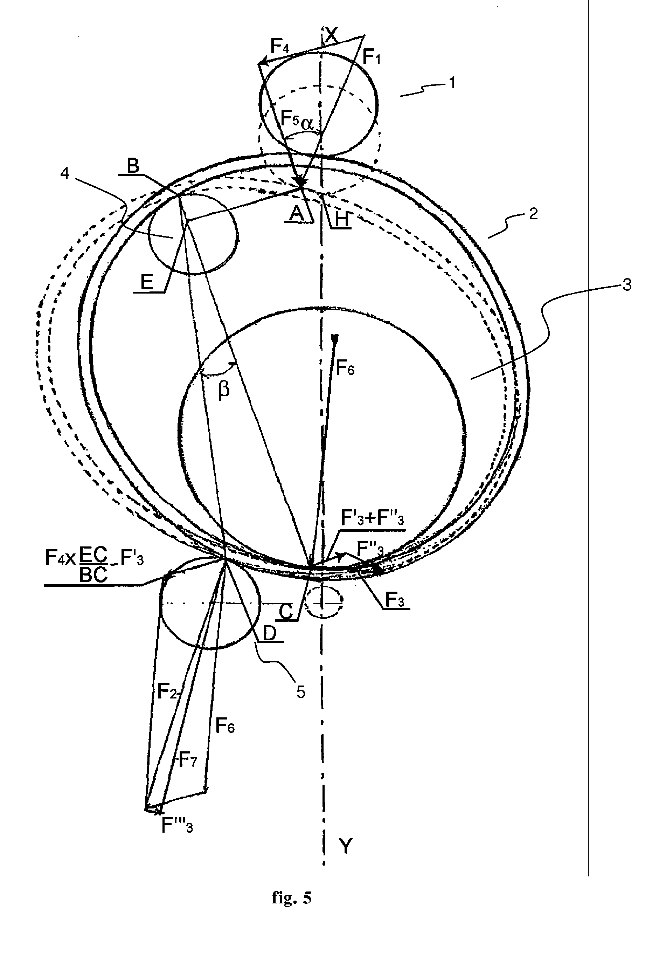

In figure 5 the positions of one ring 2, 2a when eccentricity of roller 1 is minimum (solid line) and when is maximum (dashed line) are represented, as well as the components of forces applied on ring when the eccentricity is maximum and wheel 3 is stopped.

The forces are the following:
- F₁ is the force applied by eccentric roller 1 on A,
- F₂ is the force applied by pulley 5 on D,
- F₃ is the tangential force applied by wheel 3 on C.

When eccentricity is minimum, solid line, the ring 2, 2a is eventually pressed only by pulley 5, as eccentric roller 1 is on a upper position not pressing said ring 2, 2a, resulting in force F₁ being a minimum force, whereby it is not necessary to compute respective reaction forces.

Next, forces F₁, F₂, and F₃, in case of maximum eccentricity and with the condition that resistant wheel 3 is stopped, are computed. Thus, by splitting force F₁ along BC direction and its perpendicular, two forces will be achieved (see figure 5): F4=F₁Cosα and F₅=F₁Senα.

Force F₅ acting on B will be canceled by an equal absolute value force but opposite in sign which passes through the center of pulley 4. The torque of force F₅, with respect to B, will be balanced by torque of force F'₃, which is tangential at C to the wheel 3: F'₃=F₅ x AE/BC (where AE is the distance from A to E and BC is the distance from B to C).

The torque of force F₄, with respect to D, will be balanced by torque of force F₆ with respect to same point: F₆ x CD = F₄ x EC/BC x Cosβ x BD

Forces F₆ and F₄ x EC/BC act on D, F₇ being the vector sum of two latter forces. The reaction to F₇ will be the radial force F₂ and a force F''₃ which is tangential, on C, to wheel 3. The vector sum of F'₃, -F''₃ and -F₃ is a net force whose component, in the direction of the tangent to wheel 3 on C, is F₃. The values of forces graphically represented in figure 5, are correspondent to the achieved computed values for a scale of 10 Kg = 1 cm.

Force F₁ will be computed by equation F₁= δ x L, wherein δ is the spring constant from elastic ring 2, 2a, and L is the eccentricity of roller 1. Given a ring 2, 2a of steel with 10 cm diameter, 1 cm width and 0,2 cm thickness, the spring constant will be about 8 Kgmm. Given an eccentricity of 0.5 cm, F₁ = 40 kg and F₃ = 22 kg.

### PREFERRED EMBODIMENT OF THE INVENTION

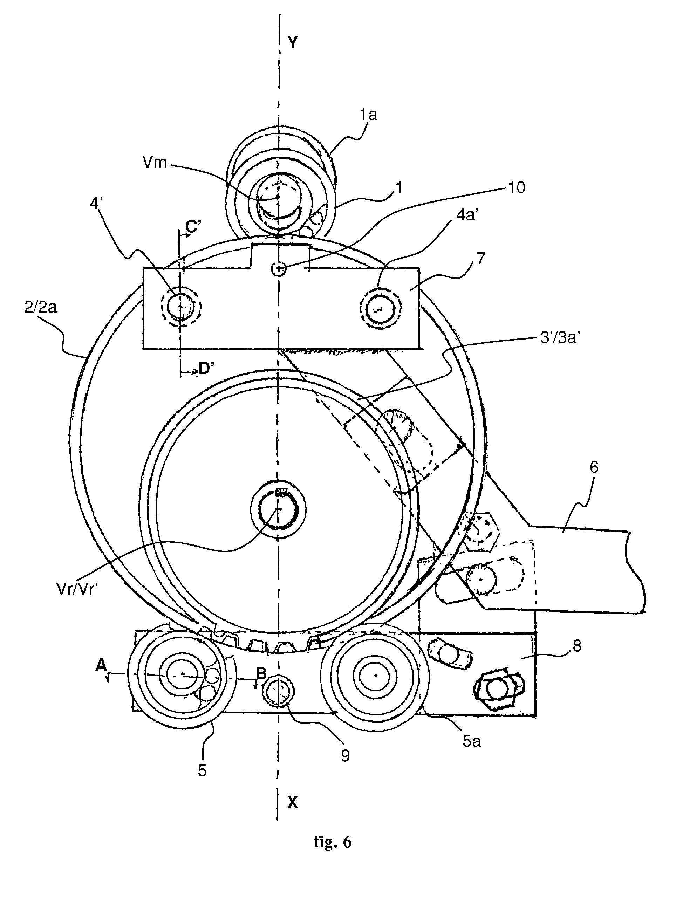

With reference to Figure 6, a preferred embodiment is illustrated, wherein the mechanism of present invention is used as motor vehicle automatic gearbox. For this purpose, instead of only one connection wheel 3, there will be two toothed wheels 3', 3a' fitted on a same axle, each of toothed wheels 3', 3a' being connected by respective resistant shafts Vᵣ, Vᵣ' to a respective drive wheel (not shown), thereby avoiding a differential. Each of said two toothed wheels 3', 3a' is served by a respective of two elastic rings 2, 2a.

Additionally, in the preferred gearbox of the present invention, for operational and constructive reasons, said arm 7 is a tilt arm 7' comprising two pairs of pulleys 4', 4a', each pair fitted on a same axle. As abovementioned, said pulleys 4', 4a' are operated by a lever 6, which is linked to said arm 7' at a rotation point 10, located half way between said two pairs of pulleys 4', 4a', providing a tilt movement to said arm 7' and therefore to said pulleys 4', 4a'.

Said lever 6 is also linked to another tilt arm 8 comprising two pulleys 5, 5a, as mentioned above, fitted at symmetric positions relative to said resistant shafts (Vᵣ, Vᵣ'). As already depicted, pulleys 5, 5a are fitted so as to contact the outer surface of said two elastic rings 2, 2a.

Tilt arm 8 is fixed, with respect to translational movement, at a rotation point 9 which is located half way between said pulleys 5, 5a, and in the other end is connected to lever 6, being operated by latter. This means tilt arm 8 and arm 7' are simultaneously operated by said lever 6.

When one of said pair of pulleys 4', 4a', simultaneously with one of said two pulleys 5, 5a, presses the elastic rings 2, 2a against said toothed wheels 3', 3a', the resultant of all forces applied to them does not pass through its geometric center, thus, generating a torque with respect to latter causing the rotation of elastic rings 2, 2a.

The lever 6 may assume one out of two positions. As mentioned above, the rotation direction of toothed wheels 3', 3a' depends on the lever 6 position, thereby allowing to reverse the rotation of said wheels 3', 3a'.

This particular configuration has the advantage of saving room due to smaller dimensions of lever 7', and allows increasing the roller 1, 1a eccentricity and therefore the power transmitted by mechanism.

The rest of the preferred automatic gearbox configuration of the present invention is similar to that of detailed description section, whereby no more description is required.

### EXAMPLE

By way of example it is considered a elastic ring 2, 2a made of glass fiber with following dimensions and features and operating at conditions below:
power, Pw
radius, R = 10 cm,
width, A = 5cm,
thickness, B = 1 cm,
eccentricity, E = 2 cm,
elastic modulus, M = 0.44*10⁶bar,
moment of inertia, I = 0.42 cm⁴
load value, P = 26800 N
spring constant, d = 0.137*P*R³/M*I

Supposing that the gearbox efficiency (the relation between the load applied by drive shaft Vₘ, through rollers 1, to the elastic ring 2 and the load applied by the elastic ring 2 to the resistant wheel 3) is 50%, and considering that the load P increases linearly with the eccentricity, the average value of the load P applied by two elastic rings 2, 2a at point C (see fig. 5) will be P = 26800 N.

If the resistant shaft Vᵣ rotates at 500 rpm and the resistant wheel 3 has 7.5 cm radius, the power transmitted to the resistant shaft Vᵣ will be computed through the following expression: Pw = P*2πR*500/(2*60) = 52.6 Kw, that is approximately 70 hp.

It is only considered the time that the elastic ring 2, 2a is being pressed (therefore the term 2*60/rpm). The energy stored in elastic ring 2, 2a will return to both drive Vₘ and resistant Vᵣ shaft proportionally to the absolute speed of contact points A and C (see fig. 5). If said energy stored is considered, the total power will increase with the angular speed relation between resistant shaft Vᵣ and drive shaft Vₘ.

It will be appreciated by a person skilled in the art that numerous variations can be made without departing from the scope of the present invention. For example, the number and arrangement of pulleys and its driven system as well as the wheel or shaft number to be used or even the kind of connection between parts may vary without however departing from the scope of the invention as set forth in accompanying claims.

## Claims

1. Automatic gearbox comprising at least one drive shaft (Vₘ), at least one resistant shaft (Vᵣ) and at least one lever (6), **characterized by** further comprising at least one eccentric roller (1, 1a), at least one connection wheel (3), at least one elastic ring (2, 2a), at least one pulley (4, 4a), at least two pulleys (5, 5a) and at least one arm (7),
wherein
said at least one eccentric roller (1, 1a) is eccentrically fitted on said at least one drive shaft (Vₘ) and makes contact with the outer surface of respective at least one elastic ring (2, 2a), this arrangement allowing said at least one roller (1, 1a) to push respective at least one elastic ring (2, 2a) on its contact point, forcing the latter to bend;
said at least one connection wheel (3) is integral with said at least one resistant shaft (Vᵣ) and is connected to said at least one elastic ring (2, 2a); said at least one elastic ring (2, 2a) transfer power from said at least one drive shaft (Vₘ) to said at least one resistant shaft (Vᵣ);
said at least one pulley (4, 4a) is fitted to said at least one arm (7) and abut onto the inner surface of respective said at least one elastic ring (2, 2a), the at least one pulley (4, 4a) being displaceable by said arm (7), to any of two symmetric positions with respect to said drive and resistant shafts (Vₘ, Vᵣ);
said at least two pulleys (5, 5a) are fitted outside of said at least one elastic ring (2, 2a) and are located in the lower part of the at least one connection wheel (3), at symmetric positions with respect to at least one resistant shaft (Vᵣ), said pulleys (5, 5a) acting to keep said at least one elastic ring (2, 2a) in contact with the at least one connection wheel (3);
said at least one arm (7) is linked to said at least one lever (6) and is operated by the latter, said arm (7) providing displacement to said at least one pulley (4, 4a) allowing to place the latter in one out of at least two symmetric positions with respect to said drive and resistant shafts (Vₘ, Vᵣ); and
the displacement of said at least one pulley (4, 4a) between said symmetric positions with respect to said drive and resistant shafts (Vₘ, Vᵣ) allows to reverse the rotation direction of said at least one connection wheel (3) and, accordingly, of said at least one resistant shaft (Vᵣ) integral therein.

2. Automatic gearbox according to claim 1, comprising one drive shaft (Vₘ), two resistant shafts (Vᵣ) and one lever (6), **characterized by** further comprising two eccentric rollers (1, 1a), two toothed wheels (3', 3a'), two elastic rings (2, 2a), two pairs of pulleys (4', 4a'), two pulleys (5, 5a), one tilt arm (7') and one tilt arm (8),
wherein
said two eccentric rollers (1, 1a) are eccentrically fitted on said drive shaft (Vₘ), in diametrical positions, each making contact with the outer surface of each of said two elastic rings (2, 2a), this arrangement allowing said two eccentric rollers (1, 1a) to push respective two elastic rings (2, 2a) alternately on its respective contact points, forcing the latter to bend alternately;
said two toothed wheels (3', 3a') are fitted on a same axle;
each of two toothed wheels (3', 3a') is integral with each of two resistant shafts (Vᵣ, Vᵣ'), and engage side teeth provided on each of said two elastic rings (2, 2a), respectively;
said two pairs of pulleys (4, 4a) are fitted, on said tilt arm (7'), in symmetric positions with respect to said resistant shafts (Vᵣ, Vᵣ'), being operated by said lever (6) which is linked to said arm (7') at a rotation point (10) located half way between said two pairs of pulleys (4', 4a'), providing a tilt movement to said arm (7');
said two pulleys (5, 5a) are placed on said tilt arm (8) in symmetric positions with respect to said two resistant shafts (Vᵣ, Vᵣ');
said tilt arm (8) is fixed, with respect to translational movement, at a rotation point (9) which is located half way between said two pulleys (5, 5a), and at another end is connected to said lever (6), being operated by latter;
said tilt arm (8) and said arm (7') are simultaneously operated by said lever (6).

3. Automatic gearbox according to claim 1, **characterized by** said at least one lever (6) being displaceable between two positions.

4. Automatic gearbox according to preceding claim, **characterized by** the displacement of said at least one lever (6) between said two positions providing reversion of rotation direction of said at least one connection wheel (3).

5. Use of automatic gearbox as set forth in preceding claims in motor vehicles, motor devices, aero-generators, continuous presses, and the like.
